# EUROPEAN PATENT SPECIFICATION

(11) **EP 3 904 096 B1**
(45) Date of publication and mention of the grant of the patent: **19.04.2023**
(21) Application number: 20186638.1
(22) Date of filing: 20.07.2020
(51) Int. Cl.: B32B 37/10, B32B 41/00, B32B 38/18, B30B 15/06, B29C 63/16, G02F 1/13

(54) **LAMINATING FIXTURE, IMPLEMENT AND METHOD**
LAMINIERVORRICHTUNG, ARBEITSGERÄT UND VERFAHREN
DISPOSITIF, OUTIL ET PROCÉDÉ DE LAMINAGE

(30) Priority: 27.04.2020 CN 202010344471
(43) Date of publication of application: 03.11.2021
(73) Proprietor: Shenzhen Liande Automation Equipment Co., Ltd, Shenzhen, Guangdong 518101 (CN)
(72) Inventor: JIANG, Xingjie, Shenzhen, Guangdong 518101 (CN)
(74) Representative: Michalski Hüttermann & Partner Patentanwälte mbB

(56) References cited:
- US-B2- 9 498 938
- US-B2- 9 889 602
- US-B2- 10 194 538

## Description

### TECHNICAL FIELD

The present disclosure relates to a field of a laminating technology, in particular, to a laminating fixture, a laminating implement, and a laminating method.

### BACKGROUND

With the development of the automotive electronic display panel industry, smart control functions have increased. In order to improve the user's experience, the demand for laminating curved surface of display modules (including flexible screens, LCDs) or films to cover glasses has increased dramatically.

In the prior art, methods for laminating the curved surface mainly include two methods of roller lamination and air bag lamination:
1. The roller laminating method refers to that a roller adopting metal roller wrapped with silicone is used to laminate the display module or the film to the cover glass under the pressure applied by rolling. The rolling path of the roller needs to scan the entire laminating surface very accurately. To apply a consistent pressure on the display module or the film, the accuracy of the pressure on the roller and the path is requested to be very high. Meanwhile, due to the limitation of the material characteristics of the display module or the film, they are easy to be damaged because of too much local pressure. The types of display module that can adopt the roller laminating method are limited, and the roller laminating method can only be applied to laminating some flexible screens such as OLEDs.
2. The air bag or diaphragm laminating method refers to that a hollow cavity formed of silicone or other elastomers and filled with air or liquid in the cavity is adopted to apply downward pressure to the display module or the film, that is gradually deformed, and finally completely laminated and attached to the cover glass.

The roller laminating method cannot laminate the display module having a glass substrate with curved surface. During the roller laminating, due to uneven pressure distribution, it is easy to produce indentation or cracking. The pressure during the air bag or diaphragm laminating is difficult to manipulate, and it is easy to produce fine bubbles. At the same time, the deformation during the air bag or diaphragm laminating is larger than 50%. To the silicone or elastomer, lager deformation dramatically decreases the life time of air bag or diaphragm made of silicone or other elastomers. There is also a risk of leakage from the liquid in air bag or diaphragm.

Technologies to the technical field are already known in prior art.

US 10,194,538 B2 refers to a method of manufacturing a display device that includes mounting a cover window including a curved portion on a first jig including a curved portion, mounting a panel member on a second jig that conforms to a surface of the first jig, and laminating the cover window to the panel member by moving a first one of the first jig or the second jig to a first other one of the first jig or the second jig. An apparatus for manufacturing a display device includes a first jig including a mount surface that is partially curved to conform to a surface of a cover window, a second jig including a surface conforming to the mount surface and configured to contact a panel member, and a driving unit.

In US 9,498,938 B2 a laminating apparatus and method are disclosed. The laminating device includes a first jig, a second jig facing the first jig, an auxiliary film fixing unit and a driving unit. A partially curved cover window is seated on the first jig. An auxiliary film and a panel member are seated on the second jig so as to be flat. The driving unit linearly moves at least one of the first and second jigs.

US 9,889,602 B2 refers to a laminating device that includes a first jig on which a first member is seated, a second jig facing the first jig, and a second member between the first jig and the second jig. The second jig includes a pad part having a top surface on which the second member is seated, the pad part having elasticity, a pad deformation part configured to support a rear surface of the pad part, and a support part to support the pad deformation part. The pad deformation part couples the pad part to the support part, and a portion of the pad deformation part has a recessed plate shape with respect to the pad part to correspond to a position thereof coupled to the support part.

### SUMMARY

Accordingly, in order to address the problem that a display module having a glass substrate cannot be laminated to a cover glass in the prior art, it is necessary to provide a laminating fixture, a laminating implement and a laminating method.

A laminating fixture for laminating an item to be attached on a convex portion of a cover glass, which includes a bracket and a buffering pad provided on the bracket. A side of the bracket facing the buffering pad forms a laminating surface. The laminating surface is capable of laminating the item to be attached via the buffering pad, so as to bend and deform the item to be attached and laminate the item to be attached on the convex portion of the cover glass.

The laminating surface of the bracket is in indirect contact with the display module through the buffering pad. When a vertical downward force is applied to the bracket, the force is transmitted to the display module through the laminating surface and the buffering pad. Accordingly, different vertical and horizontal component forces are generated at different positions of the display module, so that the display module is gradually bent and deformed until it is laminated to the cover glass. Through adopting the laminating fixture that is specially designed by the present disclosure, a hard display module can be bent and deformed so as to be laminated to the cover glass. Through a cooperation between the bracket and the buffering pad, it is ensured that the entire laminating surface of the display module is subjected to a uniform pressure. When the pressure in some areas is too high, the buffering pad can adsorb part of the pressure to prevent local cracking. When the pressure in some areas is lower, the buffering pad can compensate for the required pressure to obtain a better laminating effect.

In an embodiment, a side of the bracket away from the buffering pad is taken as a reference plane. The laminating surface includes a flat portion and two transition portions located on both sides of the flat portion. A distance from one end of the transition portion adjacent to the flat portion to the reference plane is d1, and a distance from the other end of the transition portion away from the flat portion to the reference plane is d2, d2>d 1.

In an embodiment, a thickness of a center portion of the buffering pad is 25mm. A thickness of an edge portion of the buffering pad is 10mm.

In an embodiment, a deformation amount of the buffering pad is less than or equal to 2mm.

In an embodiment, the buffering pad is made of any one of silicone, ethylene-propylene-diene monomer, natural rubber, butadiene rubber, isobutylene isoprene rubber, styrene butadiene rubber, and nitrile butadiene rubber.

According to the invention, the bracket further includes a plurality of ribs. The ribs and the laminating surface cooperatively form an accommodating cavity. The buffering pad is partially received in the accommodating cavity.

In an embodiment, stepped portion is formed at an end of the buffering pad. the stepped portion includes a first sidewall and a second sidewall. An angle is formed between the first sidewall and the second sidewall. The rib includes a first mating surface and a second mating surface. The first mating surface is connected to the laminating surface and is laminated to the first sidewall. The second mating surface is laminated to the second sidewall.

A laminating implement includes the laminating fixture as described above. The laminating implement further includes a laminating platform for fixing the cover glass and a driving device driving the laminating fixture to move in a direction towards the laminating platform.

In an embodiment, the laminating implement further includes a vacuum chamber. The laminating platform and the laminating fixture are located in the vacuum chamber.

A method for laminating an item to be attached on a convex portion of a cover glass using the laminating implement as described above includes:
fixing the cover glass on the laminating platform, wherein the convex portion of the cover glass faces upward;
transferring the item to be attached to be above the cover glass, and performing an alignment operation;
abutting a middle portion of the item to be attached against a top portion of the cover glass;
driving the laminating fixture to move in a direction towards the cover glass, so as to deform the item to be attached from the middle portion thereof, and gradually laminate the item to be attached to the cover glass.

### BRIEF DESCRIPTION OF THE DRAWINGS

FIG. 1 is a cross-sectional view of a laminating implement according to an embodiment.
FIG. 2 is a cross-sectional view of a laminating fixture shown in FIG. 1.
FIG. 3 is an explosive view of the laminating fixture shown in FIG. 2.
FIG. 4 is an enlarged view of a portion A in FIG. 3.

### DETAILED DESCRIPTION OF THE EMBODIMENTS

In order to make the above objects, features and advantages of the present disclosure more obvious and understandable, the specific embodiments of the present disclosure will be illustrated in detail below in conjunctions with the accompanying drawings. In the following description, many specific details are set forth in order to assist readers in fully understanding the present disclosure. However, the present disclosure can be implemented in many other ways than described herein, and those skilled in the art can make similar improvements without departing from the connotation of the present disclosure. Therefore, the present disclosure is not limited by the specific embodiments disclosed below.

In the description of the present disclosure, it should be understood that orientation or positional relationships indicated by terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial" "radial", "circumferential", etc. are based on orientation or positional relationship shown in the drawings, which are merely to facilitate the description of the present disclosure and simplify the description, not to indicate or imply that the device or elements must have a particular orientation, be constructed and operated in a particular orientation, and therefore cannot be construed as a limitation on the present disclosure.

In addition, the terms "first" and "second" are used for description only, and cannot be understood as indicating or implying relative importance or implicitly indicating the number of technical features described. Thus, the features defined with "first" and "second" may include at least one of the features explicitly or implicitly. In the description of the present disclosure, the meaning of "plurality" is at least two, such as two, three, etc., unless explicitly defined otherwise.

In the present disclosure, unless explicitly specified and limited otherwise, the terms "installation", "connecting", "connected", "fixed" and the like should be understood in a broad sense. For example, it may be a fixed connection or a detachable connection, or an integration, may be a mechanical connection or electrical connection, may be a direct connection, or may be an indirect connection through an intermediate medium, may be the connection between two elements or the interaction relationship between two elements, unless explicitly defined otherwise. The specific meanings of the above terms in the present disclosure can be understood by one of those ordinary skills in the art according to specific circumstances.

In the present disclosure, unless explicitly specified and limited otherwise, the first feature being "on" or "below" the second feature may be that the first and second features are in a direct contact, or the first and second features are in an indirectly contact through an intermediate medium. Moreover, the first feature being "over", "above" and "on" the second feature may be that the first feature is directly above or obliquely above the second feature, or simply means that the first feature is higher than the second feature in horizonal direction. The first feature being "beneath", "under", and "below" the second feature may be that the first feature is directly below or obliquely below the second feature, or simply means that the first feature is lower than the second feature in horizonal direction.

It should be noted that when an element is referred to as being "fixed" or "provided on" another element, it may be directly on another element or there may also be an intermediate element therebetween. When an element is considered to be "connected" to another element, it may be directly connected to another element or there may be an intermediate element therebetween. As used herein, the terms "vertical", "horizontal", "upper", "lower", "left", "right", and similar expressions are for illustration only and are not meant to be the only embodiments.

The curved display screen includes an inward curved display screen and an outward curved display screen. Compared with a flat display screen, the inward curved display screen has a curved screen that surrounds the user, which can provide a wide panoramic view for the user. Since any point on the screen is at the same distance from the eyes of the user, no matter whether an object appears at the center portion or the edge portion of the screen, it will not be deformed. In addition, when viewed at close range, it also reduces the distortion due to the non-uniform viewing distance, which can make the audience immersed in the vivid and realistic picture, giving the audience a more real and comfortable look and feel. Currently, this type of curved display screen has been applied to a display panel of an automobile. However, the conventional curved surface laminating process cannot be applicable to the production of this type of curved display screen.

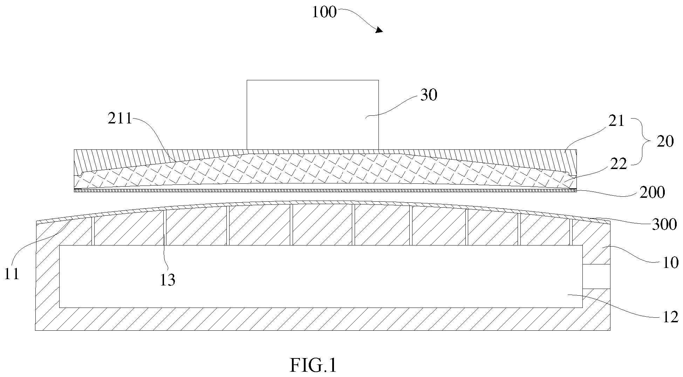

Referring to FIG. 1, in order to solve the above technical problems, a laminating implement 100 is provided, which is used to laminate a display module 200 to a cover glass 300. The laminating implement 100 includes a laminating platform 10, a laminating fixture 20, and a driving device 30.

The laminating platform 10 is used to fix the cover glass 300. The driving device 30 is used to drive the laminating fixture 20 to move in a direction towards the laminating platform 10. The display module 200 to be laminated is placed above the cover glass 300. During the approaching of the laminating fixture 20 towards the laminating platform 10, the laminating fixture 20 is in contact with the display module 200 and presses the display module 200, such that two sides of the display module 200 are bent and deformed towards the cover glass 300. During the downward movement of the laminating fixture 20, a contact area of the display module 200 and the cover glass 300 gradually expands from a middle portion to an edge portion of the display module 200, which can effectively exhaust air between the display module 200 and the cover glass 300, and improve the laminating yield.

The laminating platform 10 has a profiling surface 11 that matches the cover glass 300, thus forming an effective support for the cover glass 300. A cavity 12 is provided in the laminating platform 10. A vacuum device (not shown) is connected to the cavity 12. The profiling surface 11 is further provided with a plurality of suction holes 13 in fluid communication with the cavity 12. When the cover glass 300 is manually or automatically transferred to the profiling surface 11, the vacuum device is activated to evacuate the cavity 12, such that the cover glass 300 is adsorbed and fixed on the laminating platform 10, so as to avoid affecting the laminating yield due to the deviation of the cover glass 300 during the laminating process.

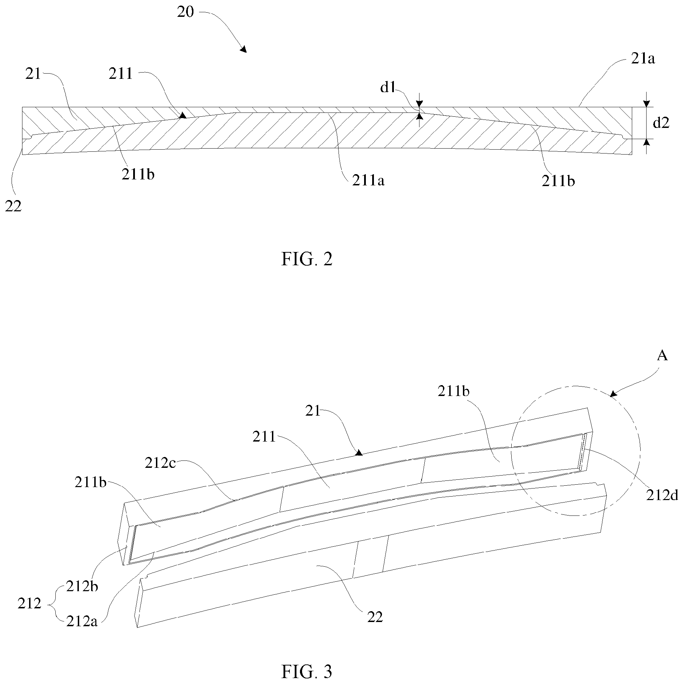

Referring to FIG. 2, the laminating fixture 20 includes a bracket 21 and a buffering pad 22 provided on the bracket 21. A side of the bracket 21 facing the buffering pad 22 forms a laminating surface 211. The laminating surface 211 can laminate the display module 200 via the buffering pad 22, so as to bend and deform the display module 200. Since the laminating surface 211 is not in direct contact with the display module 200 through the buffering pad 22, when a vertical downward force is applied to the bracket 21, the force is transmitted to the display module 200 via the laminating surface 211 and the buffering pad 22. Different vertical and horizontal component forces are generated at different positions of the display module 200, such that the display module 200 is gradually bent and deformed until it is laminated to the cover glass 300. The bracket 21 cooperates with the buffering pad 22 to ensure that the entire display module 200 is subjected to a uniform pressure. When the pressure in some areas is too high, the buffering pad 22 can adsorb part of the pressure to prevent cracking due to the local stress concentration. When the pressure in some areas is too low, the buffering pad 22 can compensate for the required pressure to obtain a better laminating effect.

Specifically, the side surface of the cover glass 300 is arc-shaped, and a convex side (i.e. the convex portion) of the cover glass 300 is laminated to the display module 200. The display module 200 may be a liquid crystal screen made of a glass substrate. Compared with a common flexible screen or film, the display module 200 has a certain rigidity. By means of the laminating fixture 20 that is specially designed by the present disclosure, the aforementioned display module 200 can be bent and deformed, so as to be laminated to the cover glass 300. It should be noted that, the application scenario of the laminating implement 100 of the present disclosure is not limited to the above embodiments, and can also be used to laminate various types of flexible screens or flexible films to a substrate having a curved structure.

It should be noted that, the cover glass 300 is pre-coated with optically clear adhesive (OCA), which is used to adhere the display module 200 to the cover glass 300.

It should be understood that, the bracket 21 is made of a metal, such as stainless steel, aluminum alloy, titanium alloy, etc., which has a certain rigidity. The buffering pad 22 is made of an elastic material and can be elastically deformed. The buffering pad 22 serves as a buffering function to avoid indentation on the display module 200. The bracket 21 and the buffering pad 22 may be assembled by adhesive, or other structures.

Referring to FIG. 2, the laminating surface 211 includes a flat portion 211a and two transition portions 211b. The two transition portions 211b are located on both sides of the flat portion 211a. Taking a side of the bracket 21 facing away from the buffering pad 22 as a reference plane 21a, the distance from the transition portion 211b to the reference plane 21a gradually increases in a direction away from the flat portion 211a. Specifically, the distance from one end of the transition portion 211b adjacent to the flat portion 211a to the reference plane 21a is d1, and the distance from the other end of the transition portion 211b away from the flat portion 211a to the reference plane 21a is d2, then d2>d1. Based on the specific mechanical model and mathematical model, the shape of the laminating surface 211 of the bracket 21 can be simulated according to the curvature of the cover glass 300 and the Poisson's ratio of the buffering pad 22, such that during the laminating process, the contact area of the display module 200 and the cover glass 300 expands from the middle portion to both sides, so as to gradually laminate the display module 200 to the cover glass 300, and ensure that the bubbles between the display module 200 and the cover glass 300 are completely eliminated, thereby improving the laminating yield.

In an embodiment, the transition portion 211b is an inclined surface forming a certain angle with respect to the reference plane 21a. In other embodiments, the transition portion 211b may also be a circular arc surface. It should be understood that, there are many ways to select the reference plane 21a. For example, the surface of the bracket 21 away from the buffering pad 22 can be selected as the reference plane 21a. Other suitable horizontal planes may also be used as the reference plane 21a. This is mainly for the convenience of understanding the shape of the transition portion 211b, and the shape of the bracket 21 should not be limited thereto.

When the laminating fixture 20 is located above the display module 200, the center portion of the buffering pad 22, the middle portion of the display module 200, and the top portion of the cover glass 300 are aligned. The middle portion of the display module 200 abuts against the top portion of the cover glass 300. During the downward pressing of the laminating fixture 20, the middle portion of the display module 200 is subjected to a larger force, and the risk of cracking is higher. The thickness of the center portion of the buffering pad 22 is designed to be 25mm, such that it can adsorb some of the pressure and prevent the display module 200 from being crushed.

When the laminating fixture 20 is located above the display module 200, the edge portion of the buffering pad 22 corresponds to the edge portion of the display module 200. If it is required that the display module 200 is completely laminated to the cover glass plate 300, compared to the middle portion of the display module 200, both sides of the display module 200 have a greater degree of bending deformation. The thickness of the edge portion of the buffering pad 22 is designed to be 10mm, thus ensuring that the acting force applied to the edge portion of the display module 200 is strong enough to bend and deform the edge portion until it is laminated to the cover glass 300.

The deformation amount of the buffering pad 22 is less than or equal to 2mm. By reasonably designing the structure of the laminating surface 211 of the bracket 21 and the thickness of the buffering pad 22, it can be ensured that the deformation amount of the buffering pad 22 does not exceed 2mm during the laminating process, which is beneficial to extend the service life of the buffering pad 22.

The buffering pad 22 is made of any one of silicone, ethylene-propylene-diene monomer (copolymer of ethylene, propylene and butadiene, EPDM), natural rubber (cis-1,4-isoprene polymer), butadiene rubber (cis-1,4-butadiene polymer), isobutylene isoprene rubber (copolymer of isobutylene and isoprene), styrene butadiene rubber (copolymer of styrene and butadiene), and nitrile butadiene rubber (copolymer of acrylonitrile and butadiene).

Referring to FIG. 3, the bracket 21 further includes a plurality of ribs 212. The ribs 212 and the laminating surface 211 cooperatively form an accommodating cavity. The buffering pad 22 is partially received in the accommodating cavity. The ribs 212 can restrict the buffering pad 22 from different directions, which facilitates mounting and positioning the buffering pad 22. At the same time, the contact area between the buffering pad 22 and the bracket 21 can be increased, such that the buffering pad 22 and the bracket 21 can be adhered more firmly.

In an embodiment, the bracket 21 includes four ribs 212, which are a first rib 212a, a second rib 212b, a third rib 212c, and a fourth rib 212d, respectively. The first rib 212a and the third rib 212c are arranged opposite to each other. The second rib 212b and the fourth rib 212d are arranged opposite to each other. The second rib 212b is adjacent to one of the transition portions 211b of the laminating surface 211. The fourth rib 212d is adjacent to the other one of the transition portions 211b of the laminating surface 211.

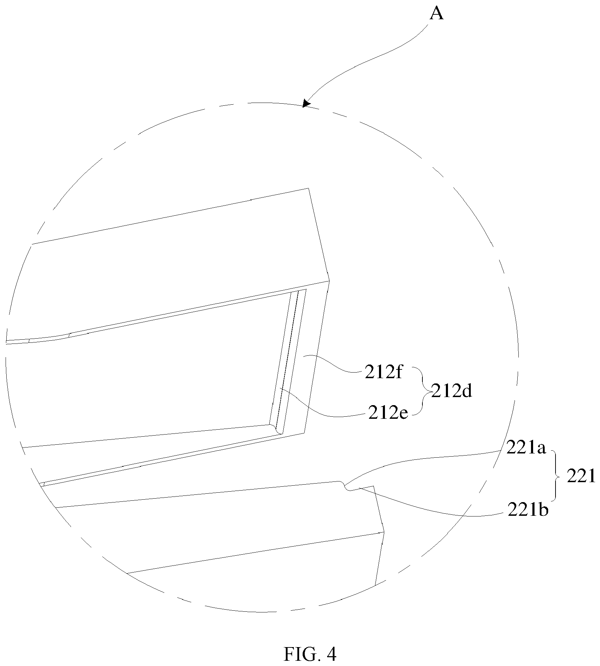

Referring to FIGS. 3 and 4, a stepped portion 221 are formed at the ends of the buffering pad 22. The stepped portion 221 include a first sidewall 221a and a second sidewall 221b. An angle is formed between the first sidewall 221a and the second sidewall 221b. The second rib 212b and the fourth rib 212d include a first mating surface 212e and a second mating surface 212f, respectively. The first mating surface 212e is connected to the laminating surface 211. The first mating surface 212e is laminated to the first sidewall 221a. The second mating surface 212f is laminated to the second sidewall 221b. The stepped portion 221 formed at the both ends of the buffering pad 22 are in contact with the second rib 212b and the fourth rib 212d, respectively, such that the second rib 212b and the fourth rib 212d are enclosed to avoid that the second rib 212b and the fourth rib 212d are in direct contact with the display module 200 and thus an indentation is avoided on the display module 200 during the laminating.

The driving device may be a power component such as a servo motor or a cylinder.

The laminating implement 100 further includes a vacuum chamber. The laminating platform 10 and the laminating fixture 20 are located in the vacuum chamber, such that the entire laminating process is performed in a vacuum environment, which prevents bubbles from entering between the display module 200 and the cover glass 300, thereby improving the laminating yield. Specifically, the vacuum chamber includes an upper vacuum chamber and a lower vacuum chamber. In an embodiment, the laminating fixture 20 is fixed on the upper vacuum chamber. The laminating platform 10 is located in the lower vacuum chamber. The upper vacuum chamber can move in a direction towards the lower vacuum chamber. When the upper vacuum chamber and the lower vacuum chamber are closed, the vacuum environment can be formed. In another embodiment, the laminating fixture 20 may be provided in the lower vacuum chamber, and the laminating platform 10 may be provided in the upper vacuum chamber.

A method for laminating an item to be attached on a cover glass using the aforementioned laminating implement is further provided, which includes the following steps:

In step S100, the cover glass 300 is fixed on the laminating platform 10, and the convex portion of the cover glass 300 faces upward.

Specifically, the side surface of the cover glass 300 is arc-shaped. The convex side (i.e. the convex portion) of the cover glass 300 is laminated to the display module 200. The laminating platform 10 has the profiling surface 11 that matches the cover glass 300, thus forming an effective support for the cover glass 300. The laminating platform 10 is provided with the cavity 12. The cavity 12 is connected to the vacuum device. The profiling surface 11 is further provided with a plurality of suction holes 13 in fluid communication with the cavity 12. When the cover glass 300 is manually or automatically transferred to the profiling surface 11 of the laminating platform 10, the vacuum device is activated to evacuate the cavity 12, such that the cover glass 300 is adsorbed and fixed on the laminating platform 10, so as to avoid affecting the laminating yield due to the deviation of the cover glass 300 during the laminating process.

In step S200, an item to be attached is transferred to be above the cover glass 300, and an alignment operation is performed.

The item to be attached may be liquid crystal screen made of the glass substrate, and have a certain rigidity. The flexible screens or flexible films may also be used as the items to be attached. The laminating implement 100 further includes a camera module. The camera module sequentially captures images of the cover glass 300 and the item to be attached, and calculates positional deviation between the cover glass 300 and the item to be attached. Relative position of the cover glass 300 and the item to be attached is adjusted according to the positional deviation until the cover glass 300 is aligned with the item to be attached.

In step S300, the middle portion of the item to be attached abuts against the top portion of the cover glass 300.

The cover glass 300 is pre-coated with optically clear adhesive (OCA), so as to adhere and fix the middle portion of the item to be attached to the top portion of the cover glass 300.

In step S400, the laminating fixture 20 is driven to moves in a direction towards the cover glass 300, so as to deform the item to be attached from the middle portion thereof, and gradually laminate the item to be attached to the cover glass 300.

The laminating fixture 20 includes the bracket 21 and the buffering pad 22. The buffering pad 22 is provided on the bracket 21. The side of the bracket 21 facing the buffering pad 22 forms a laminating surface 211. The laminating surface 211 can laminate the display module 200 via the buffering pad 22, so as to bend and deform the display module 200 and laminate the display module 200 to the convex portion of the cover glass 300. Since the laminating surface 211 of the bracket 21 is not in direct contact with the display module 200 through the buffering pad 22, when a vertical downward force is applied to the bracket 21, the force is transmitted to the display module 200 through the laminating surface 211 and the buffering pad 22. Different vertical and horizontal component forces are generated at different positions of the display module 200, such that the display module 200 is gradually bent and deformed until it is laminated to the cover glass 300. Through the cooperation between the bracket 21 and the buffering pad 22, it is ensured that the entire display module 200 is subjected to the uniform pressure. When the pressure in some areas is too high, the buffering pad 22 can adsorb part of the pressure to prevent cracking due to the local stress concentration. When the pressure in some areas is too low, the buffering pad 22 can compensate for the required pressure to obtain a better laminating effect.

Each technical features of the above embodiments can be arbitrarily combined. For simplifying the description, all possible combinations of the technical features in the embodiments are not described. However, as long as there is no contradiction in the combination of these technical features, they should be fallen within the scope of this description.

## Claims

1. A laminating fixture (20) for laminating an item to be attached on a convex portion of a cover glass (300), the laminating fixture (20) comprising:
a bracket (21); and
a buffering pad (22) provided on the bracket (21),
wherein a side of the bracket (21) facing the buffering pad (22) forms a laminating surface (211), the laminating surface (211) is capable of laminating the item to be attached via the buffering pad (22), so as to bend and deform the item to be attached and laminate the item to be attached on the convex portion of the cover glass (300),
wherein the bracket (21) further comprises a plurality of ribs (212), the ribs (212) and the laminating surface (211) cooperatively form an accommodating cavity, the buffering pad (22) is partially received in the accommodating cavity.

2. The laminating fixture (20) according to claim 1, wherein a side of the bracket (21) away from the buffering pad (22) is taken as a reference plane, the laminating surface (211) comprises a flat portion (211a) and two transition portions (211b) located on both sides of the flat portion (211a); a distance from one end of the transition portion (211b) adjacent to the flat portion (211a) to the reference plane is d1, and a distance from the other end of the transition portion (211b) away from the flat portion (211a) to the reference plane is d2, d2>d1.

3. The laminating fixture (20) according to claim 1, wherein a thickness of a center portion of the buffering pad (22) is 25mm; a thickness of an edge portion of the buffering pad (22) is 10mm.

4. The laminating fixture (20) according to claim 1, wherein a deformation amount of the buffering pad (22) is less than or equal to 2mm.

5. The laminating fixture (20) according to claim 1, wherein the buffering pad (22) is made of any one of silicone, ethylene-propylene-diene monomer, natural rubber, butadiene rubber, isobutylene isoprene rubber, styrene butadiene rubber, and nitrile butadiene rubber.

6. The laminating fixture (20) according to claim 1, wherein a stepped portion (221) is formed at an end of the buffering pad, the stepped portion (221) comprises a first sidewall (221a) and a second sidewall (221b); an angle is formed between the first sidewall (221a) and the second sidewall (221b), the rib (212) comprises a first mating surface (212e) and a second mating surface (212f), the first mating surface (212e) is connected to the laminating surface (211) and is laminated to the first sidewall (221a), the second mating surface (212f) is laminated to the second sidewall (221b).

7. A laminating implement (100), comprising:
the laminating fixture (20) according to any one of claims 1 to 6;
a laminating platform (10) for fixing the cover glass (300); and
a driving device (30) driving the laminating fixture (20) to move in a direction towards the laminating platform (10).

8. The laminating implement (100) according to claim 7, further comprising a vacuum chamber, wherein the laminating platform (10) and the laminating fixture (20) are located in the vacuum chamber.

9. A method for laminating an item to be attached on a convex portion of a cover glass (300) using the laminating implement (100) according to any one of claims 7 to 8, comprising:
fixing the cover glass (300) on the laminating platform (10), wherein the convex portion of the cover glass (300) faces upward;
transferring the item to be attached to be above the cover glass (300), and performing an alignment operation;
abutting a middle portion of the item to be attached against a top portion of the cover glass (300);
driving the laminating fixture (20) to move in a direction towards the cover glass (300), so as to deform the item to be attached from the middle portion thereof, and gradually laminate the item to be attached to the cover glass (300).

## Patentansprüche

1. Laminiervorrichtung (20) zum Laminieren eines auf einem konvexen Abschnitt eines Deckglases (300) zu befestigenden Gegenstandes, wobei die Laminiervorrichtung (20) aufweist:
eine Halterung (21); und
ein an der Halterung (21) vorgesehenes Pufferpad (22),
wobei eine dem Pufferpad (22) zugewandte Seite der Halterung (21) eine Laminierfläche (211) bildet, wobei die Laminierfläche (211) dazu geeignet ist, den zu befestigenden Gegenstand über das Pufferpad (22) zu laminieren, um den zu befestigenden Gegenstand zu biegen und zu verformen und den zu befestigenden Gegenstand auf den konvexen Abschnitt des Deckglases (300) zu laminieren,
wobei die Halterung (21) ferner eine Vielzahl von Rippen (212) aufweist, wobei die Rippen (212) und die Laminierfläche (211) zusammenwirkend einen Aufnahmehohlraum bilden, wobei das Pufferpad (22) teilweise im Aufnahmehohlraum aufgenommen ist.

2. Laminiervorrichtung (20) nach Anspruch 1, wobei eine vom Pufferpad (22) abgewandte Seite der Halterung (21) als eine Bezugsebene genommen wird, die Laminierfläche (211) einen flachen Abschnitt (211a) und zwei Übergangsabschnitte (211b) aufweist, die auf beiden Seiten des flachen Abschnitts (211a) angeordnet sind, ein Abstand von einem dem flachen Abschnitt (211a) benachbarten Ende des Übergangsabschnitts (211b) zur Bezugsebene d1 ist, und ein Abstand von dem vom flachen Abschnitt (211a) entfernten anderen Ende des Übergangsabschnitts (211b) zur Bezugsebene d2 ist, wobei d2 > d1 ist.

3. Laminiervorrichtung (20) nach Anspruch 1, wobei die Dicke eines mittleren Abschnitts des Pufferpads (22) 25 mm und die Dicke eines Randabschnitts des Pufferpads (22) 10 mm beträgt.

4. Laminiervorrichtung (20) nach Anspruch 1, wobei ein Verformungsmaß des Pufferpads (22) kleiner oder gleich 2 mm ist.

5. Laminiervorrichtung (20) nach Anspruch 1, wobei das Pufferpad (22) aus einem Material unter Silikon, Ethylen-Propylen-Dien-Monomer, Naturkautschuk, Butadien-Kautschuk, Isobutylen-Isopren-Kautschuk, Styrol-Butadien-Kautschuk oder Nitril-Butadien-Kautschuk hergestellt ist.

6. Laminiervorrichtung (20) nach Anspruch 1, wobei an einem Ende des Pufferpads ein abgestufter Abschnitt (221) ausgebildet ist, wobei der abgestufte Abschnitt (221) eine erste Seitenwand (221a) und eine zweite Seitenwand (221b) aufweist, ein Winkel zwischen der ersten Seitenwand (221a) und der zweiten Seitenwand (221b) gebildet wird, die Rippe (212) eine erste Passfläche (212e) und eine zweite Passfläche (212f) aufweist, die erste Passfläche (212e) mit der Laminierfläche (211) verbunden und auf die erste Seitenwand (221a) laminiert ist und die zweite Passfläche (212f) auf die zweite Seitenwand (221b) laminiert ist.

7. Laminierwerkzeug (100), mit:
der Laminiervorrichtung (20) nach einem der Ansprüche 1 bis 6;
einer Laminierplattform (10) zum Befestigen des Deckglases (300); und
einer Antriebseinrichtung (30) zum Antreiben der Laminiervorrichtung (20) derart, dass sie sich in Richtung zur Laminierplattform (10) bewegt.

8. Laminierwerkzeug (100) nach Anspruch 7, ferner mit einer Vakuumkammer, wobei die Laminierplattform (10) und die Laminiervorrichtung (20) in der Vakuumkammer angeordnet sind.

9. Verfahren zum Laminieren eines auf einem konvexen Abschnitt eines Deckglases (300) zu befestigenden Gegenstandes unter Verwendung des Laminierwerkzeugs (100) nach einem der Ansprüche 7 bis 8, mit den Schritten:
Fixieren des Deckglases (300) auf der Laminierplattform (10), wobei der konvexe Abschnitt des Deckglases (300) nach oben weist;
Bewegen des zu befestigenden Gegenstandes derart, dass er sich oberhalb des Deckglases (300) befindet, und Ausführen eines Ausrichtungsvorgangs;
Anlegen eines Mittenabschnitts des zu befestigenden Gegenstands an einen oberen Abschnitt des Deckglases (300);
Antreiben der Laminiervorrichtung (20), so dass sie sich in Richtung zum Deckglas (300) bewegt, um den zu befestigenden Gegenstand von seinem Mittenabschnitt aus zu verformen; und
graduelles Laminieren des zu befestigenden Gegenstandes auf das Deckglas (300).

## Revendications

1. Dispositif de laminage (20) pour laminer un article à attacher sur une partie convexe d'un verre de protection (300), le dispositif de laminage (20) comprenant :
un support (21) ; et
un coussin amortisseur (22) pourvu sur le support (21),
dans lequel un côté du support (21) faisant face au coussin amortisseur (22) forme une surface de laminage (211), la surface de laminage (211) est apte à laminer l'article à attacher au moyen du coussin amortisseur (22), de sorte à plier et déformer l'article à attacher sur la partie convexe du verre de protection (300),
dans lequel le support (21) comprend en outre une pluralité de nervures (212), les nervures (212) et la surface de laminage (211) forment de manière coopérative une cavité d'accueil, le coussin amortisseur (22) est partiellement reçu dans la cavité d'accueil.

2. Dispositif de laminage (20) selon la revendication 1, dans lequel un côté du support (21) à l'opposé du coussin amortisseur (22) sert de plan de référence, la surface de laminage (211) comprend une partie plate (211a) et deux parties de transition (211b) situées des deux côtés de la partie plate (211a) ; une distance depuis une extrémité de la partie de transition (211b) adjacente à la partie plate (211a) jusqu'au plan de référence est d1, et une distance depuis l'autre extrémité de la partie de transition (211b) à l'opposé de la partie plate (211a) jusqu'au plan de référence est d2, d2 > d1.

3. Dispositif de laminage (20) selon la revendication 1, dans lequel une épaisseur d'une partie centrale du coussin amortisseur (22) est 25 mm, une épaisseur d'une partie de bord du coussin amortisseur (22) est 10 mm.

4. Dispositif de laminage (20) selon la revendication 1, dans lequel une quantité de déformation du coussin amortisseur (22) est inférieure ou égale à 2 mm.

5. Dispositif de laminage (20) selon la revendication 1, dans lequel le coussin amortisseur (22) est fabriqué en un quelconque parmi la silicone, un monomère éthylène-propylène-diène, le caoutchouc naturel, le caoutchouc butadiène, le caoutchouc isobutylène isoprène, le caoutchouc styrène butadiène et le caoutchouc nitrile butadiène.

6. Dispositif de laminage (20) selon la revendication 1, dans lequel une partie étagée (221) est formée à une extrémité du coussin amortisseur, la partie étagée (221) comprend une première paroi latérale (221a) et une seconde paroi latérale (221b) ; un angle est formé entre la première paroi latérale (221a) et la seconde paroi latérale (221b), la nervure (212) comprend une première surface de contact (212e) et une seconde surface de contact (212f), la première surface de contact (212e) est reliée à la surface de laminage (211) et est laminée sur la première paroi latérale (221a), la seconde surface de contact (212f) est laminée sur la seconde paroi latérale (221b).

7. Outil de laminage (100), comprenant :
le dispositif de laminage (20) selon l'une quelconque des revendications 1 à 6 ;
une plateforme de laminage (10) pour fixer le verre de protection (300) ; et
un appareil d'entraînement (30) entraînant le dispositif de laminage (20) à se déplacer dans un sens allant vers la plateforme de laminage (10).

8. Outil de laminage (100) selon la revendication 7, comprenant en outre une chambre à vide, dans lequel la plateforme de laminage (10) et le dispositif de laminage (20) sont situés dans la chambre à vide.

9. Procédé de laminage d'un article à attacher sur une partie convexe d'un verre de protection (300) en utilisant l'outil de laminage (100) selon l'une quelconque des revendications 7 à 8, comprenant :
la fixation du verre de protection (300) sur la plateforme de laminage (10), dans lequel la partie convexe du verre de protection (300) est tournée vers le haut ;
le transfert de l'article à attacher de sorte à ce qu'il soit au-dessus du verre de protection (300), et la réalisation d'une opération d'alignement ;
l'appui d'une partie médiane de l'article à attacher sur une partie supérieure du verre de protection (300) ;
l'entraînement du dispositif de laminage (20) de sorte qu'il se déplace dans un sens allant vers le verre de protection (300), de façon à déformer l'article à attacher à partir de la partie médiane de celui-ci, et progressivement laminer l'article à attacher sur le verre de protection (300).
